# EUROPEAN PATENT APPLICATION

(11) **EP 4 383 421 A1**
(43) Date of publication of application: **12.06.2024**
(21) Application number: 22212290.5
(22) Date of filing: 08.12.2022
(51) Int. Cl.: H01M 50/22, H01M 50/224, H01M 50/233, H01M 50/244, H01M 10/658, H01M 50/231

(54) **BATTERY CABINET FOR ACCOMMODATING ONE OR MORE BATTERY MODULES, BATTERY PACK, AND BATTERY SYSTEM**

(71) Applicant: ABB SCHWEIZ AG, 5400 Baden (CH)
(72) Inventor: MOLITOR, Francoise, 8057 Zürich (CH); SCHUME, Matthias, 79787 Lauchringen (DE); MEIER, Felix, 5443 Niederrohrdorf (CH); GILGEN, Alexander, 5443 Niederrohrdorf (CH); KURMANN, Sebastian, 6208 Oberkirch (CH)
(74) Representative: Sykora & König Patentanwälte PartG mbB

(57) **Abstract**

A battery cabinet (20) for accommodating one or more battery modules (20) is provided. The battery cabinet (20) comprises: a cabinet housing (21) comprising or being made of a first material; and one or more connection elements (36, 38), wherein the connection elements (36, 38) are arranged within the cabinet housing (21), are fixedly coupled to the cabinet housing (21), are configured for holding the corresponding battery modules (22) within the cabinet housing (21), and comprise or are made of a second material, wherein a thermal conductivity of the second material is lower than a thermal conductivity of the first material.

## Description

### FIELD OF THE INVENTION

The invention relates to the field of battery cabinets, battery packs and battery systems. In particular, the invention relates to a battery cabinet for accommodating one or more battery modules, to a battery pack comprising the battery cabinet and one or more of the battery modules, and to a battery system comprising one or more of the battery cabinets and/or battery packs.

### BACKGROUND OF THE INVENTION

An increasing number of vehicles, e.g. cars, trains, subways, busses, is equipped with high-performance battery cells. A typical high-performance battery cell may have a nominal capacity between 1 Ah and 1000 Ah and may be used for driving the corresponding vehicle, in particular for providing a power train of the corresponding vehicle with energy.

Conventional high-performance battery cells may be fully assembled and encapsulated in battery modules. Then, the battery modules may be combined and accompanied in one or more battery cabinets, e.g., 6 to 12 battery modules within one battery cabinet. The battery cabinets may also be referred to as string boxes. These battery cabinets may be combined to a battery system for being arranged in the vehicles. The battery system may also be referred to as energy storage system.

The battery cabinets have to fulfil a number of requirements from different areas: huge mechanical strength, compactness, small weight, thermal decoupling between the corresponding battery modules and the environment, e.g. the surrounding air and/or water, low costs, etc. The mechanical, compactness and weight requirements come from the fact that these battery systems may be installed on top of or below a train or a bus, with limited available space and exposed to acceleration forces and vibrations. The thermal requirements come from the fact that the battery modules usually are very temperature sensitive, both during storage and application. In general, they may have strict temperature limits in order to limit ageing, enable the required charge or discharge power and guarantee safety. During operation, the battery module temperature is controlled by liquid cooling. During storage, however, the cooling system is usually out of operation.

These requirements are partially contradicting, e.g. regarding the mechanical strength, thermal performance and weight. For example, battery cabinets known in the art may be made from aluminum alloys due to weight reasons. However, these battery cabinets have a relatively high thermal conductivity which is in contradiction to the thermal requirements. In contrast, some battery cabinets known in the art are made from stainless steel due to the correspondingly high mechanical strength and low thermal conductivity. However, these battery cabinets have a relatively high weight.

Due to the narrow-allowed temperature range of the battery cells, and the possibly harsh ambient conditions when parking outside overnight or under strong solar irradiation during the day, thermal decoupling between the battery cabinets and the corresponding battery modules may be needed in order to ensure that the battery system can deliver the needed power at startup and that the temperature remains in the safe range. This is the reason why often thermal insulation materials are used on the inside of the cabinet housing. However, these thermal insulation materials are expensive and difficult to apply, and they can increase the fire hazard. In addition, the thermal insulation materials within a cabinet housing of the battery cabinets may only have a limited impact on thermal behavior as they do not affect the heat conduction over the metallic connection needed for structural reasons.

### DESCRIPTION OF THE INVENTION

Therefore, it is an objective of the present invention to provide a battery cabinet for accommodating one or more battery modules which may enable to fulfil strict requirements with respect to mechanical strength, thermal performance, and low weight.

Further, it is an objective of the present invention to provide a battery pack which may enable to fulfil strict requirements with respect to mechanical strength, thermal and electrical performance, and low weight.

Further, it is an objective of the present invention to provide a battery system which may enable to fulfil strict requirements with respect to mechanical strength, thermal and electrical performance, and low weight.

These objectives are achieved by the subject-matter of the independent claims. Further exemplary embodiments are evident from the dependent claims and the following description.

In particular, an objective of the present invention is achieved by a battery cabinet for accommodating one or more battery modules. The battery cabinet comprises a cabinet housing comprising or being made of a first material; and one or more connection elements, wherein the connection elements are arranged within the cabinet housing, are fixedly coupled to the cabinet housing, are configured for holding the corresponding battery modules within the cabinet housing, and comprise or are made of a second material, wherein a thermal conductivity of the second material is lower than a thermal conductivity of the first material.

The connection elements enable to thermally decouple the battery modules from the cabinet housing. In particular, the connection elements comprising or being made of the second material having the relatively low thermal conductivity form a thermal barrier for thermal energy which may be transferred from the environment to the battery modules or vice versa. The first material may be any material having a low weight and/or low price, wherein the thermal conductivity of the first material may be high. In contrast, the second material may be any material having a low thermal conductivity, wherein the weight and/or price may not be so important, because the connection elements may only represent a small part of the battery cabinet. In this way, a very good thermal decoupling of the cabinet housing from the battery modules may be provide by the connection elements comprising or being made of the second material, whereas the low weight and/or low costs may be enabled by the cabinet housing comprising or being made of the first material. This enables to provide the battery cabinet for accommodating one or more of the battery modules which may enable to fulfil the strict requirements with respect to high mechanical strength, good thermal performance, and low weight. Further, because of the connection elements of the second material having the low thermal conductivity, there is no need for any additional thermal insulating materials within the cabinet housing. This may contribute to the low price, low weight, and/or less production effort of the battery cabinet. In addition, the new material combination of the first and second material may contribute to a reduced fire load due to the now possible elimination of the internal thermal insulating materials within the cabinet housing.

The battery modules each may comprise one or more high-performance battery cells having a nominal capacity between 1 Ah and 1000 Ah. The nominal capacity may be between 20 Ah and 500 Ah, e.g. between 25 Ah and 100 Ah.

According to an embodiment, the first material is aluminum. Alternatively or additionally, the second material is stainless steel. The aluminum contributes to the low weight and low costs of the battery cabinet, because of the relatively low weight and relatively low costs of aluminum, e.g. compared to stainless steel. The stainless steel contributes to the high mechanical strength and the good thermal performance, in particular by providing a very good thermal decoupling of the battery modules from the cabinet housing, because of the relatively low thermal conductivity of stainless steel, e.g. compared to aluminum. In particular, for weight reasons, the cabinet housing may be made of aluminum, whereas the mechanical connection between the battery modules and the cabinet housing is done via the connection elements of stainless steel. These stainless-steel parts provide the required mechanical stiffness, and also increase the thermal resistance between the aluminum cabinet housing and the battery modules.

So, this new battery cabinet design makes use of the much lower thermal conductivity of e.g. stainless steel compared to e.g. aluminum (stainless steel: 15 W/m K, aluminum: 235 W/m K). In order to improve the thermal (and mechanical) behaviour without increasing the weight too much, the mechanical design is adjusted by the connection elements comprising or being made of stainless steel instead of aluminum and with respect to the prior art battery cabinets being made of aluminum only, the materials of only a few selected elements, i.e., the connection elements, is changed from aluminum to stainless steel.

According to an embodiment, the only material connection between the battery modules and the cabinet housing is at least in part exclusively provided by one or more of the connection elements. This may mean in this context that the only material connection between the battery modules and the cabinet housing is provided by one or more of the connection elements. Alternatively, this may mean in this context that the only material connection between the battery modules and the cabinet housing is provided by one or more of the connection elements and by one or more holders for holding the battery modules, wherein a part of the material connection is provided by one or more of the connection elements only such that the thermal energy may not bypass the connection elements via the holder or any other material connection. In other words, the connection elements each may form a bridge from the battery modules, and in case the holders, to the cabinet housing, and there may be no other way for the thermal energy from the battery modules to the cabinet housing or vice versa as these bridges and the air. This ensures that thermal energy which is transferred by the material connection has to propagate from the battery module to the cabinet housing via the connection elements and cannot bypass the connection elements, e.g. via the holder. The only bypass for the thermal energy may be provided by the air within the cabinet housing. However, this may be acceptable, because the thermal conductivity of air within a closed space is relatively low. The holder may comprise or may be made of the first material.

According to an embodiment, one or more of the connection elements are provided by L-profiles, with each L-profile comprising two legs; one of the legs of one of the connection elements is coupled to the cabinet housing; and the other one of the legs of the same connection element is configured for being coupled to one or more of the battery modules or to correspondingly one or more holders for holding the battery modules. For example, the cabinet may comprise two L-profiles for holding two or more of the battery modules. For example, one of the two L-profiles is arranged at one side of the cabinet housing and the other one of the two L-profiles is arranged at an opposite side of the cabinet housing, wherein the battery modules are arranged between the two L-profiles. For example, the L-profiles are arranged at an upper region of the cabinet housing.

The above holder may be provided by another L-profile. The holder may comprise or may be made of the first material. The holder may form a material connection between the battery modules and the connection elements.

According to an embodiment, one or more of the connection elements are provided by hat-profiles, with each hat-profile comprising two brim elements and a crone element coupling the two brim elements. For example, the cabinet may comprise two hat-profiles for holding two or more of the battery modules. For example, one of the two hat-profiles is arranged at one side of the cabinet housing and the other one of the two hat-profiles is arranged at an opposite side of the cabinet housing, wherein the battery modules are arranged between the two hat-profiles. For example, the hat-profiles are arranged at a lower region of the cabinet housing.

According to an embodiment, the brim elements are coupled to the cabinet housing; and the crone element is configured for being coupled to one or more of the battery modules or to correspondingly one or more holders for holding the battery modules. Alternatively, the brim elements may be coupled to one or more of the battery modules or to correspondingly one or more holders for holding the battery modules, and the crone element may be configured for being coupled to the cabinet housing.

For example, each battery module may be coupled to the cabinet housing by one or more, e.g. two, of the L-profiles and/or one or more, e.g. two, of the hat-profiles. For example, the battery pack comprises two upper L-profiles at opposing sides of the cabinet housing and two lower hat-profiles at opposing sides of the cabinet housing, wherein these four profiles hold all of the battery modules of one battery system.

According to an embodiment, one or more of the connection elements each are provided for holding two or more of the battery modules. For example, the connection elements may extend along at least two or more, e.g. all, of the battery modules within the cabinet housing and may hold each of the battery modules. This may contribute to a small number of parts, in particular connection elements, needed for the battery cabinet and as such may contribute to a simple structure of the battery cabinet.

According to an embodiment, the battery cabinet comprises at least one insulation layer for thermally insulating the cabinet housing against an environment of the cabinet housing, wherein the insulation layer is arranged at an outside of the cabinet housing. The insulation layer may improve the thermal decoupling of the cabinet housing with the accommodated battery modules from the environment.

According to an embodiment, the battery cabinet comprises at least one terminal for electrically coupling the battery modules to an external device, wherein the terminal is arranged at an outside of the cabinet housing; and a cover being arranged at the cabinet housing and being configured for covering the terminal. The cover may contribute to thermally isolate that side of the cabinet at which the cover is arranged. The terminal may be arranged at a short side, e.g., a front side, of the cabinet housing. The cover may be configured for fluid tightly covering the terminal. This may increase the thermal insulation effect of the cover. The fluid may be gaseous or liquid, e.g., air or water. The external device may be a control unit or Battery Management System (BMS) for controlling the battery modules or a load which is supplied with energy by the battery modules.

According to an embodiment, the battery cabinet comprises another thermal insulation between the cover and the cabinet housing. The other thermal insulation may increase the insulating effect of the cover.

An objective of the present invention is achieved by a battery pack. The battery pack comprises the above battery cabinet and one or more battery modules being arranged within the cabinet housing and being coupled to the cabinet housing by the one or more of the connection elements.

The above features, advantages and/or effects of the battery cabinet may be transferred to the battery pack. Therefore, a repetition of these features, advantages and/or effects is omitted and it is referred to the above explanations only in order to provide a concise description.

An objective of the present invention is achieved by a battery system. The battery system comprises at least two of the above battery cabinets, or at least two of the above battery packs, wherein two or more of the corresponding battery cabinets are arranged next to and spaced apart from each other.

The above features, advantages and/or effects of the battery cabinet and/or battery pack may be transferred to the battery system. Therefore, a repetition of these features, advantages and/or effects is omitted and it is referred to the above explanations only in order to provide a concise description.

According to an embodiment, a gap between two neighbouring of the battery cabinets is closed against an environment of the battery system. In particular, the gaps may be closed off from the surrounding air to avoid that lateral side walls of the cabinet housing are in direct contact with the cold outside air. This may contribute to limit the heat transfer by convection in these areas.

According to an embodiment, the gap is fluid tightly closed against an environment of the battery system. This may contribute to increase the thermal insulation effect achieved by closing the gap. The fluid may be gaseous or liquid.

According to an embodiment, the battery cabinets are arranged in a row, a first insulation layer is arranged on an outside of the first battery cabinet in the row facing away from the rest of the battery cabinets, and a second insulation layer is arranged on the last battery cabinet in the row facing away from the rest of the battery cabinets. In particular, the outer lateral side walls of the first and the last battery cabinets may be thermally decoupled from the surrounding air to avoid that these outer lateral side walls of the sum of cabinet housings within the battery system are in direct contact with the cold outside air. This may contribute to limit the heat transfer by convection in these areas.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 schematically shows a perspective view an exemplary embodiment of a battery pack;
Fig. 2 schematically shows a cross-sectional perspective side view of an exemplary embodiment of a battery cabinet of the battery pack of figure 1 without any battery modules;
Fig. 3 schematically shows a cross-sectional perspective side view of the battery cabinet of figure 2 with at least one battery module;
Fig. 4 schematically shows a detailed cross-sectional perspective side view of the battery cabinet of figure 3;
Fig. 5 schematically shows another detailed cross-sectional perspective side view of the battery cabinet of figure 3;
Fig. 6 schematically shows a perspective view of an exemplary embodiment of a battery system.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

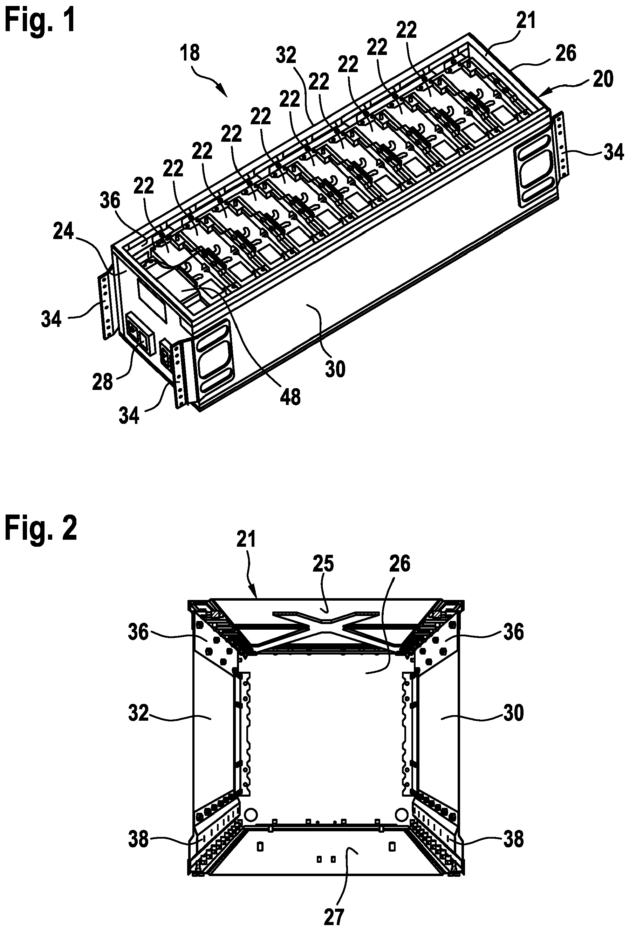

Fig. 1 schematically shows a perspective view an exemplary embodiment of a battery pack 18. The battery pack 18 comprises a battery cabinet 20 having a cabinet housing 21 and one or more battery modules 22 being arranged within the cabinet housing 21. The battery modules 22 are coupled to the cabinet housing 21 by one or more connection elements 36, 38 (see figure 2). The battery pack 18 may additionally comprise one or more electronic components 48 for driving the battery modules 22. The electronic components 48 may be arranged in the cabinet housing 21 and/or may be configured as Battery Management System (BMS) for controlling the battery pack 18 and/or the battery modules 22.

The battery modules 22 each may comprise one or more a battery cells (not shown). One or more of the battery cells may be a high-performance battery cell. For example, the battery pack 18 may be used for driving a car, a train, a subway, a bus, etc. The high-performance battery cells each may have a nominal capacity between 15 Ah and 1.000 Ah. The nominal capacity may be between 20 Ah and 500 Ah, e.g. between 25 Ah and 100 Ah.

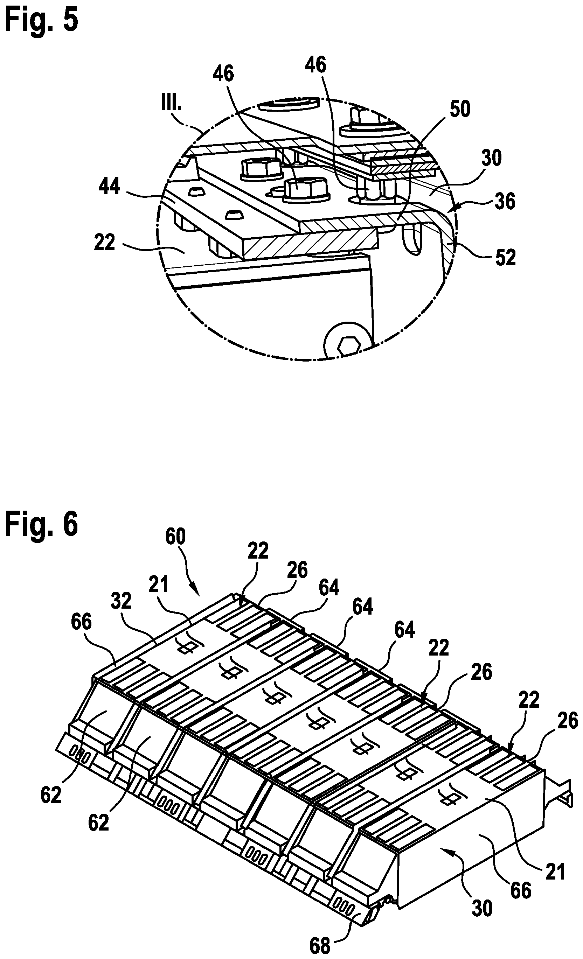

The cabinet housing 21 may comprise a front side 24, a back side 26, a first lateral side 30, and a second lateral side 32. A top 25 of the battery cabinet 21 is removed in figure 1 (but visible in figure 2) such that the battery modules 22 are visible, whereas a bottom 27 of the battery cabinet 21 is covered and therefore not visible in figure 1 (but visible in figure 2). The cabinet housing 21 may further comprise coupling means 34 for coupling the cabinet housing 21 with another structure (not shown), e.g. with a structure for holding the cabinet housing 21, e.g. within the corresponding vehicle and/or within a battery system 60 (see figure 6).

One or more terminals 28 of the battery cabinet 20 for electrically coupling the battery pack 18, in particular the battery modules 22, to an external device (not shown) may be provided at the front side 24 of the cabinet housing 21. These terminals 28 may be electrically coupled to one or more of the electronic components 48. The external device may be a control unit or a load (not shown) which is supplied with energy by the battery modules 22. The load may be an electric motor. Alternatively or additionally, one or more of the terminals 28 may be configured as cooling terminal(s). These cooling terminals may comprise one or more pipe connections for being coupled to correspondingly one or more cooling pipes for circulating a cooling medium.

Fig. 2 schematically shows a cross-sectional perspective side view of an exemplary embodiment of the battery cabinet 20 of the battery pack 18 of figure 1 without any battery modules 22. One or more of the connection elements 36, 38 each may be provided for holding two or more of the battery modules 22. For example, the connection elements 36, 38 may extend along at least two or more, e.g. all, of the battery modules 22 within the cabinet housing 21 and may hold each of the battery modules 22 (see figure 1).

As may be seen from figure 2, the battery cabinet 20 may comprise two different kinds of connection elements 36, 38, wherein first connection elements 36 may be arranged in an upper region of the cabinet housing 21 and second connection elements 38 may be arranged in a lower region of the cabinet housing 21. The connection elements 36, 38 are fixedly coupled to the cabinet housing 21. The connection elements 36, 38 are configured for holding the corresponding battery modules 22 within the cabinet housing 21.

The cabinet housing 21 comprises or is made of a first material, whereas the connection elements 36, 38 comprise or are made of a second material. A thermal conductivity of the second material is lower than a thermal conductivity of the first material. For example, the first material is aluminum. Alternatively or additionally, the second material is stainless steel.

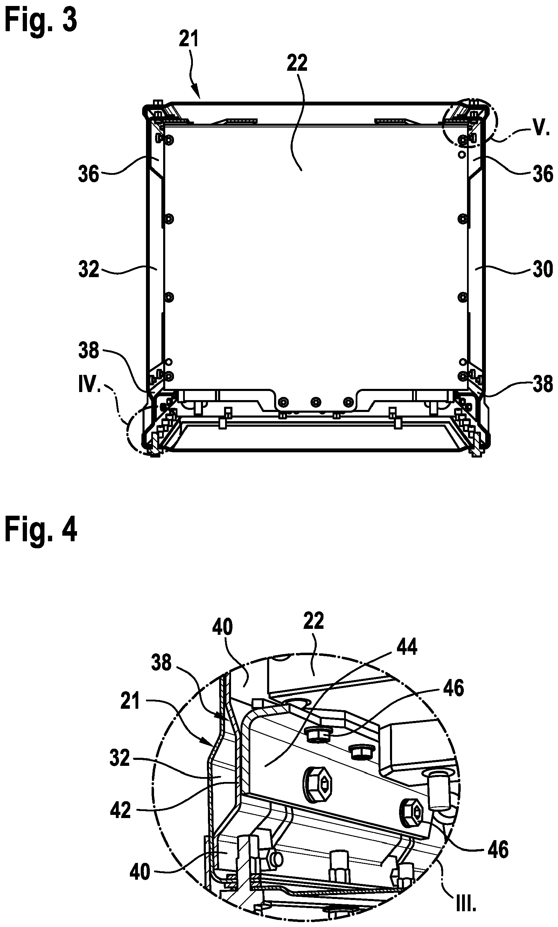

Fig. 3 schematically shows a cross-sectional perspective side view of the battery cabinet 20 of figure 2 with at least one battery module 22. As may be seen from figure 3, and also from the following figures 4 and 5, the only material connection between the battery modules 22 and the cabinet housing 21 is provided by one or more of the connection elements 36, 38 and optionally by one or more holders 44, wherein a part of the material connection is provided by the one or more of the connection elements 36, 38 only such that the thermal energy may not bypass the connection elements 36, 38 via the holders 44 or any other material connection. In other words, the only material connection between the battery modules 22 and the cabinet housing 21 is at least in part exclusively provided by one or more of the connection elements 36, 38. So, the only bypass around the connection elements 36, 38 for a thermal energy from the battery modules 22 to the cabinet housing 21 or vice versa may be provided by the air within the cabinet housing 21. The holders 44 may comprise or may be made of aluminum.

Alternatively, the only material connection between the battery modules 22 and the cabinet housing 21 is provided by one or more of the connection elements 36, 38 only, wherein the holders 44 are removed in this embodiment. In this case, the battery modules 22 may be directly coupled to and/or may physically touch the connection elements 36, 38. Further, the battery modules 22 may be coupled to the cabinet housing 21 by the connection elements 36, 38 only.

Fig. 4 schematically shows a detailed cross-sectional perspective side view of the battery cabinet 21 with the battery module 22 of figure 3. As may be seen from figure 4, the second connection elements 38 each may be provided by a corresponding hat-profile. Each hat-profile comprises two brim elements 40 and a crone element 42 coupling the two brim elements 40. The brim elements 40 may be coupled to the cabinet housing 21. The crone element 42 may be configured for being coupled to one or more of the battery modules 22 or to correspondingly one or more of the holders 44 for holding the battery modules 22. For example, the battery cabinet 21 may comprise two hat-profiles for holding two or more of the battery modules 22. For example, one of the two hat-profiles is arranged at the first lateral side 30 of the cabinet housing 21 and the other one of the two hat-profiles is arranged at the opposing second side 32 of the cabinet housing 21, wherein the battery modules 22 may be arranged between the two hat-profiles. For example, the hat-profiles are arranged at the lower region of the cabinet housing 21 and may constitute the second connection elements 38.

The holders 44 may be coupled to the second connection elements 38 and/or to the battery modules 22 by one or more fixation means 46, e.g. by screws.

Fig. 5 schematically shows another detailed cross-sectional perspective side view of the battery cabinet 21 with the battery module 22 of figure 3. As may be seen from figure 5, the first connection elements 36 may be provided by L-profiles, with each L-profile comprising two legs 50, 52. One of the legs 52 of one of the first connection elements 36 is coupled to the cabinet housing 21. The other one of the legs 50 of the same connection element 36 is coupled to the battery module 22 or to one or more of the holders 44 for holding the battery modules 22. For example, the battery cabinet 20 may comprise two L-profiles for holding two or more of the battery modules 22. For example, one of the two L-profiles is arranged at the first lateral side 30 of the cabinet housing 21 and the other one of the two L-profiles is arranged at the opposing second side 32 of the cabinet housing 21, wherein the battery modules 22 may be arranged between the two L-profiles. For example, the L-profiles may be arranged at an upper region of the cabinet housing 21. The above holder 44 may also be provided by another L-profile, wherein - in contrast to the connection elements 36, 38 - the holders 44 may comprise or may be made from the first material, e.g. aluminum.

As may be seen from the above embodiment, each battery module 22 may be coupled to the cabinet housing 21 by one or more, e.g. two, of the L-profiles and/or one or more, e.g. two, of the hat-profiles. For example, the battery pack 18 may comprise two upper L-profiles at opposing sides of the cabinet housing 21, i.e. the first and second lateral sides 30, 32, and two lower hat-profiles at the opposing sides of the cabinet housing 21, wherein these four profiles hold all of the battery modules 22 of one battery system 60 (see figure 6).

Fig. 6 schematically shows a perspective view of an exemplary embodiment of the battery system 60. The battery system 60 comprises at least two of the above battery cabinets 20, or at least two of the above battery packs 18. The battery cabinets 20 may be arranged in a row. The battery cabinets 20 may be mechanically coupled to a connection bar 68. Two or more of the corresponding battery cabinets 20 are arranged next to and spaced apart from each other. Gaps between two neighbouring of the battery cabinets 20 may be fluid-tightly closed against the environment of the battery system 60. In particular, the gaps may be closed off from the surrounding air. The gaps may be closed by one or more gap closures 64. The gap closures 64 may comprise plates, wherein each plate may embody one gap closure 64 and wherein one of the plates may at least partly close the gap between two neighbouring battery cabinets 20.

One or more of the battery cabinets 20 may comprises an insulation layer 66 at an outside of the corresponding battery cabinet 20 for thermally insulating the corresponding cabinet housing 21 against an environment of the corresponding cabinet housing 21. For example, one insulation layer 66 may be arranged on an outside of the first battery cabinet 20 in the row of battery cabinets 20, the outside facing away from the rest of the battery cabinets 20 within the row. Another insulation layer 66 may be arranged on the last battery cabinet 20 in the row of battery cabinets 20 facing away from the rest of the battery cabinets 20. In particular, the outer lateral side walls of the first and the last battery cabinets 20 in the row may be additionally thermally decoupled by the insulation layers 66 from the surrounding air to avoid that these outer lateral side walls of the sum of cabinet housings 21 within the battery system 60 are in direct contact with the outside air. Alternatively, the lateral sides 30, 32 of all cabinet housings 21 may be provided with corresponding insulation layers 66.

The terminals 28 which are arranged at an outside of the corresponding cabinet housings 21 may be covered by covers 62. The covers 62 may fluid tightly cover the corresponding terminals 28. The covers 62 and the terminals 28 may be arranged at a short side, e.g., the front side 24, of the corresponding cabinet housings 21. Another insulation material, e.g. another insulation layer may be arranged between the covers 62 and the corresponding sides of the corresponding battery housings 21.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. For example, more or less battery modules 22 may be arranged in one battery cabinet 20. Alternatively or additionally, more or less battery cabinets 20 may be arranged in one battery system 60. Further, the connection elements 36, 38 may only comprise the first connection elements 36 or only the second connection elements 38, but e.g. four of the corresponding kind, two in the upper region and two in the lower region of the cabinet housing 21. Further, there may be more or less of the connection elements 36, 38. For example, one or more of the connection elements 36, 38 may be coupled to a subset of the battery modules 22 only.

In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 18: battery pack
- 20: battery cabinet
- 21: cabinet housing
- 22: battery module
- 24: front side
- 25: top
- 26: back side
- 27: bottom
- 28: terminal
- 30: first lateral side
- 32: second lateral side
- 34: coupling means
- 36: first connection elements
- 38: second connection elements
- 40: brim element
- 42: crone element
- 44: holder
- 46: fixation means
- 48: electronic components
- 50: first leg
- 52: second leg
- 60: battery system
- 62: cover
- 64: gap closure
- 66: insulation layer
- 68: connection bar

## Claims

1. A battery cabinet (20) for accommodating one or more battery modules (20), comprising:
a cabinet housing (21) comprising or being made of a first material; and
one or more connection elements (36, 38), wherein the connection elements (36, 38) are arranged within the cabinet housing (21), are fixedly coupled to the cabinet housing (21), are configured for holding the corresponding battery modules (22) within the cabinet housing (21), and comprise or are made of a second material,
wherein a thermal conductivity of the second material is lower than a thermal conductivity of the first material.

2. The battery cabinet (20) in accordance with claim 1, wherein
the first material is aluminum; and/or
the second material is stainless steel.

3. The battery cabinet (20) in accordance with one of the preceding claims, wherein
the only material connection between the battery modules (20) and the cabinet housing (21) is at least in part exclusively provided by one or more of the connection elements (36, 38).

4. The battery cabinet (20) in accordance with one of the preceding claims, wherein
one or more of the connection elements (36) are provided by L-profiles, with each L-profile comprising two legs (50, 52);
one of the legs (52) of one of the connection elements (36) is coupled to the cabinet housing (21); and
the other one of the legs (50) of the same connection element (36) is configured for being coupled to one or more of the battery modules (20) or to correspondingly one or more holders (44) for holding the battery modules (20).

5. The battery cabinet (20) in accordance with one of the preceding claims, wherein
one or more of the connection elements (38) are provided by hat-profiles, with each hat-profile comprising two brim elements (40) and a crone element (42) coupling the two brim elements (40).

6. The battery cabinet (20) in accordance with claim 5, wherein
the brim elements (40) are coupled to the cabinet housing (21); and
the crone element (42) is configured for being coupled to one or more of the battery modules (20) or to correspondingly one or more holders (44) for holding the battery modules (20).

7. The battery cabinet (20) in accordance with one of the preceding claims, wherein
one or more of the connection elements (36, 38) each are provided for holding two or more of the battery modules (20).

8. The battery cabinet (20) in accordance with one of the preceding claims, comprising
at least one insulation layer (66) for thermally insulating the cabinet housing (21) against an environment of the cabinet housing (21), wherein the insulation layer (66) is arranged at an outside of the cabinet housing (21).

9. The battery cabinet (20) in accordance with one of the preceding claims, comprising
at least one terminal (28) for electrically coupling the battery modules (20) to an external device, wherein the terminal (28) is arranged at an outside of the cabinet housing (21); and
a cover (62) being arranged at the cabinet housing and being configured for covering the terminal (28).

10. The battery cabinet (20) in accordance with claim 9, comprising
another thermal insulation between the cover and the cabinet housing,

11. A battery pack (18), comprising:
a battery cabinet (20) in accordance with one of the preceding claims; and
one or more battery modules (20) being arranged within the cabinet housing (21) and being coupled to the cabinet housing (21) by the one or more connection elements (36, 38).

12. A battery system (60), comprising:
at least two battery cabinets (20) in accordance with one of claims 1 to 10, or at least two battery packs (18) in accordance with claim 11; and
wherein two or more of the corresponding battery cabinets (20) are arranged next to and spaced apart from each other.

13. The battery system (60) in accordance with claim 12, wherein
wherein a gap between two neighbouring of the battery cabinets (20) is closed against an environment of the battery system (60).

14. The battery system (60) in accordance with claim 13, wherein
the gap is fluid tightly closed against an environment of the battery system (60).

15. The battery system (60) in accordance with one of claims 12 to 14, wherein
the battery cabinets (20) are arranged in a row,
a first insulation layer (66) is arranged on an outside of the first battery cabinet (20) in the row facing away from the rest of the battery cabinets (20), and
a second insulation layer (66) is arranged on the last battery cabinet (20) in the row facing away from the rest of the battery cabinets (20).
